(19) Europäisches Patentamt
European Patent Office
Office européen des brevets

(11) **EP 1 706 708 B1**

(12) **EUROPÄISCHE PATENTSCHRIFT**

(45) Veröffentlichungstag und Bekanntmachung des Hinweises auf die Patenterteilung:
**17.07.2013 Patentblatt 2013/29**

(21) Anmeldenummer: 05706871.0

(22) Anmeldetag: **13.01.2005**

(51) Int Cl.:
*G01D 5/04* (2006.01)     *B62D 15/02* (2006.01)

(86) Internationale Anmeldenummer:
**PCT/EP2005/000238**

(87) Internationale Veröffentlichungsnummer:
**WO 2005/068942 (28.07.2005 Gazette 2005/30)**

(54) **LENKWINKELSENSOR**

STEERING ANGLE SENSOR

CAPTEUR D'ANGLE DE BRAQUAGE

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **20.01.2004 DE 102004004023**

(43) Veröffentlichungstag der Anmeldung:
**04.10.2006 Patentblatt 2006/40**

(73) Patentinhaber: **Valeo Schalter und Sensoren GmbH**
**74321 Bietigheim-Bissingen (DE)**

(72) Erfinder: **RUETZ, Christian**
**71636 Ludwigsburg (DE)**

(74) Vertreter: **Pothmann, Karsten**
**Valeo Schalter und Sensoren GmbH**
**74319 Bietigheim-Bissingen (DE)**

(56) Entgegenhaltungen:
**EP-A- 0 477 653         DE-A1- 4 409 892**
**DE-A1- 19 818 799    US-A1- 2004 004 471**

**Beschreibung**

Die Erfindung betrifft Lenkwinkelsensor mit einem drehsynchron mit einer Lenksäule oder Lenkrad koppelbaren Hauptrotor, der um die Drehachse der Lenksäule herum drehbar ist, mit mindestens einem vom Hauptrotor antreibbaren Zusatzrotor, mit einer ersten Abtasteinheit zur Abtastung der Drehwinkelstellung des Hauptrotors, mit einer zweiten Abtasteinheit zur Abtastung der Drehwinkelstellung des Zusatzrotors.

Aus dem Stand der Technik sind Lenkwinkelsensoren bekannt, die auf einem optischen Prinzip basieren. Ein solcher Lenkwinkelsensor kann einen Rotor mit Codescheiben aufweisen, deren Code durch eine Abtasteinheit abtastbar ist. Üblicherweise ist der Code der Codescheiben durch Zähne unterschiedlicher Breite mit zwischengeschalteten Zahnlücken realisiert. Die Zähne beziehungsweise die Zahnlücken können durch optische Mittel, insbesondere durch Fotozellen, erfasst werden. Bedingt durch fertigungstechnische Beschränkungen kann mit einem derartigen Code zur Bestimmung der Drehwinkelstellung des Lenkrads lediglich eine Auflösung im Bereich von etwa 1,5 ° erreicht werden.

Nachteilig bei der Verwendung von optischen Mitteln ist außerdem, dass bei langer Betriebsdauer, insbesondere bei Verwendung in einem Kraftfahrzeug, die optischen Mittel Verschleißerscheinungen durch Schmutzeinwirkung unterliegen. Weiterhin ist die Herstellung der Codescheiben verhältnismäßig aufwändig.

Zur Verbesserung der Auflösung wird gemäß der DE 101 10 785 A1 vorgeschlagen, ein Zählrad zu verwenden, das von einem Rotor angetrieben wird, der eine Codescheibe aufweist. Die Drehwinkelstellung des Zählrades kann durch zwei voneinander im Winkelabstand von 90 ° zueinander versetzte Magnetfeldsensoren erfolgen und zur Berechnung des absoluten Lenkradwinkels herangezogen werden. Mit dieser Ausführung lässt sich die oben genannte Auflösung um etwa Faktor 2 verbessern.

Weiterhin ist aus der DE 195 06 938 A1 ein Lenkwinkelsensor bekannt, bei dem mit einem Hauptrotor zwei Zusatzrotoren antreibbar sind, wobei die Drehwinkelstellung der Zusatzrotoren über Sensoren erfasst werden kann. Über die Drehwinkelstellung der vom Rotor angetriebenen Zusatzrotoren kann die Winkelstellung des Hauptrotors mathematisch ermittelt werden. Dabei lassen sich Auflösungen von bis zu 0,1 ° erzielen.

Nachteilig bei der in der DE 195 06 938 A1 vorgeschlagenen Anordnung ist die Tatsache, dass zusätzlich zum Rotor mindestens zwei Drehkörper erforderlich sind. Diese beanspruchen einen verhältnismäßig großen Platz. Außerdem müssen die Drehkörper letztlich vom Fahrer eines mit einem solchen Lenkwinkelsensor ausgestatteten Fahrzeugs angetrieben werden, wodurch entweder die erforderlichen Betätigungskräfte steigen oder eine stärkere Lenkunterstützung notwendig ist.

Aus der DE 44 09 892 A1 ist ein Lenkwinkelsensor bekannt geworden, bei dem neben einer ersten Codescheibe eine weitere Codescheibe vorgesehen ist und zwischen den Codescheiben Räderpaare vorgesehen sind.

Aus der EP-A-0 477 653 und der DE 19936 211 A1 sind ebenfalls ähnliche Lenkwinkelsensoren bekannt.

Hiervon ausgehend liegt der vorliegenden Erfindung die Aufgabe zugrunde, einen möglichst hochauflösenden, kompakten Lenkwinkelsensor zu schaffen.

Diese Aufgabe wird mit einem Lenkwinkelsensor mit den Merkmalen des Anspruchs 1 gelöst.

Durch die erfindungsgemäße Ausführung kann ein Lenkwinkelsensor mit einem besonders kleinen Raumbedarf geschaffen werden. Der Zusatzrotor erstreckt sich nicht, wie aus dem Stand der Technik bekannt, außerhalb der Lenksäule, sondern nutzt den um die Lenksäule zur Verfügung stehenden Bauraum. Somit kann die radiale Erstreckung des erfindungsgemäßen Lenkwinkelsensors auf ein Minimum reduziert werden. Dies ist insbesondere im Hinblick auf die möglichen Einbauorte eines Lenkwinkelsensors vorteilhaft. Ein Lenkwinkelsensor kann benachbart oder innerhalb eines Lenkrads angeordnet sein, wobei der Trend, im Lenkrad immer mehr Betätigungselemente für Fahr- oder Komfortfunktionen unterzubringen, zu einer Verknappung des für einen Lenkwinkelsensor zur Verfügung stehenden Bauraums führt. Auch bei Einbau des Lenkwinkelsensors in einer vom Lenkrad entfernten Lage (bspw. im Bereich des Lenkgetriebes) steht, insbesondere bei kleineren Kraftfahrzeugen, nur sehr wenig Bauraum zur Verfügung.

Da trotz der kompakten Bauweise des erfindungsgemäßen Lenkwinkelsensors zwei Rotoren abgetastet werden können, kann auch bei Verwendung von Abtasteinheiten, die auf einem optischen Prinzip basieren, eine gute Auflösung erzielt werden. Somit können durch den erfindungsgemäßen Lenkwinkelsensor die Anforderungen "kompakte Bauweise" und "gute Auflösung" gleichermaßen erfüllt werden.

Dabei ist die Rotationsachse des Hauptrotors und die Rotationsachse des Zusatzrotors zueinander versetzt. Auf diese Weise können sehr flexibel verschiedene Übersetzungsverhältnisse berücksichtigt werden, die sich aus der Kopplung von Hauptrotor, Getriebeglied und Zusatzrotor ergeben.

Der Lenkwinkelsensor kann eine Auswerteeinheit zur Auswertung der Ausgangssignale der Abtasteinheiten umfassen. Diese kann auch in eine Elektronikeinheit integriert sein, die weitere Fahrzeugfunktionen überwacht und/oder steuert.

Eine Ausführungsform der Erfindung sieht vor, dass die Rotationsachse des Hauptrotors koaxial zur Drehachse der Lenksäule ist. Dies ermöglicht es, dass der Hauptrotor direkt mit der Lenksäule und/oder dem Lenkrad und/oder einem Lenkradgehäuse gekoppelt werden kann. Entsprechend kann auch die Rotationsachse des Zusatzrotors koaxial zur Drehachse der Lenksäule angeordnet sein.

Das Getriebeglied kann einen Antriebsabschnitt zum Antrieb durch den Hauptrotor und einen Abtriebsabschnitt zum Antrieb des Zusatzrotors aufweisen. Der Antriebs- und der Abtriebsabschnitt können bspw. jeweils durch eine Verzahnung gebildet sein. So kann durch ein Getriebeglied auch eine mehrstufige Übersetzung erreicht werden.

Die Übersetzung der Getriebekette aus Hauptrotor, Getriebeglied und Zusatzrotor entspricht vorteilhafter Weise einem Zahlenwert aus der Menge der positiven reellen Zahlen, ausgenommen der Menge der positiven ganzen Zahlen. Insbesondere sollte die Übersetzung ungleich 1 sein. Bei einem ganzzahligen Übersetzungsverhältnis kann das Problem auftauchen, dass die von den verschiedenen Magnetfeldsensoranordnungen erzeugten Signale in verschiedenen Drehwinkelstellungen von Hauptrotor und Zusatzrotor zueinander identisch sind, so dass eine Auswertung, welche absolute Lenkradstellung vorliegt, möglicherweise nicht eindeutig ist. Dieses Problem wird durch die Verwendung von nicht ganzzahligen Übersetzungsverhältnissen behoben.

Besonders vorteilhaft für eine gute Auflösung des Lenkwinkelsensor ist es, wenn Hauptrotor und Zusatzrotor jeweils sich über einen Winkelbereich erstreckende Magnetabschnitte mit Sektoren unterschiedlicher Polung aufweisen und wenn beide Abtasteinheiten Magnetfeldsensoranordnungen aufweisen, deren Ausgangssignale der Auswerteeinheit zur Bestimmung des absoluten Lenkradwinkels zuführbar sind. Hierdurch kann auf die Verwendung von optischen Mitteln, insbesondere von Codescheiben und Fotozellen, verzichtet werden. Durch die Verwendung von Magnetfeldsensoranordnungen anstelle von optischen Mitteln kann ein verschleißunanfälliger und auch bei zunehmender Verschmutzung zuverlässig funktionierender Lenkwinkelsensor bereitgestellt werden.

Unter Magnetfeldsensoranordnung soll ein Magnetfeldsensor oder eine Mehrzahl von Magnetfeldsensoren verstanden werden. Der mindestens eine Magnetfeldsensor kann als Hallsensor oder als magnetoresistiver Sensor ausgeführt sein.

Vorteilhafterweise nehmen die Sektoren eines Magnetabschnitts einen gleichen Winkel ein. Somit können durch die Magnetfeldsensoranordnungen gleichmäßige, wellenförmige Ausgangssignale erzeugt werden. Beispielsweise kann der Magnetabschnitt einen Winkel von 12 ° einnehmen und zwei als Nord- und als Südpol ausgebildete Sektoren aufweisen, die jeweils einen Winkel von 6 ° einnehmen.

Vorteilhafterweise weist der Hauptrotor und/oder der Zusatzrotor mindestens zwei Magnetabschnitte auf. Aus dem Stand der Technik ist bekannt, einen Drehkörper mit einem Magnetabschnitt auszustatten, der sich über einen Winkel von jeweils 180 ° erstreckende, unterschiedlich gepolte Sektoren umfasst. Durch die Verwendung von mehreren Magnetabschnitten kann die Genauigkeit der Drehwinkelerfassung des Hauptrotors und/oder des Zusatzrotors erhöht werden. So kann der Hauptrotor mindestens 5, insbesondere 15 Magnetabschnitte und der Zusatzrotor mindestens 4, insbesondere 12 Magnetabschnitte aufweisen. Diese wiederum können gleichmäßig entlang eines Kreises verteilt sein. Auch diese Maßnahme dient dazu, die Ausgangssignale der Magnetfeldsensoranordnungen zu vergleichmäßigen.

Vorteilhafterweise weist eine Magnetfeldsensoranordnung mindestens einen analogen Magnetfeldsensor auf. Somit können die Ausgangssignale der Magnetfeldsensoren nicht nur hinsichtlich Über- oder Unterschreitung eines Schwellwerts ausgewertet werden. Vielmehr kann ein analoges Ausgangssignal, das beispielsweise einem bestimmten Spannungswert entspricht, ausgewertet werden. Hierdurch können höhere Auflösungen erzielt werden als bei Verwendung von digital arbeitenden Magnetfeldsensoren. Selbstverständlich ist die Auswertung des analogen Signals mit Hilfe von Analog/Digital-Wandlern ebenfalls möglich. Hierbei sollte jedoch auf eine ausreichende Bitzahl, beispielsweise 8 bit, geachtet werden, um Auflösungen von ca. 0,1 ° zu ermöglichen.

Vorteilhafterweise weist eine Magnetfeldsensoranordnung zwei zueinander versetzt angeordnete Magnetfeldsensoren auf. Diese Sensoren können beispielsweise um die Hälfte des von einem Sektor eines Magnetabschnitts eingenommenen Winkelbereichs zueinander versetzt sein. Nimmt beispielsweise ein Magnetabschnitt einen Winkel von 12 ° ein und nehmen die Sektoren dieses Magnetabschnitts jeweils einen Winkel von 6 ° ein, so können die Magnetfeldsensoren um 3 ° zueinander versetzt sein. Durch diese Konstellation kann durch einen ersten Magnetfeldsensor der Magnetfeldsensoranordnung ein Sinus-Signal detektiert werden, während vom zweiten, zum ersten Sensor versetzten Magnetfeldsensor ein Cosinus-Signal detektiert werden kann. Diese Signale können der Auswerteeinheit zugeführt werden und dort zur Bestimmung des absoluten Lenkradwinkels herangezogen werden.

Die Magnetabschnitte können entlang des äußeren Umfangs des Hauptrotors und/oder des Zusatzrotors vorgesehen sein, und die Magnetfeldsensoranordnungen können in radialer Richtung versetzt zu den Magnetabschnitten angeordnet sein. Diese Anordnung erlaubt eine besonders flache Bauweise des Lenkwinkelsensors.

Es ist auch möglich, dass die Magnetabschnitte entlang einer konzentrisch zur Drehachse des Hauptrotors und/oder des Zusatzrotors angeordneten Kreises vorgesehen sind und die Magnetfeldsensoranordnungen in axialer Richtung versetzt zu den Magnetabschnitten angeordnet sind. Durch diese Bauweise kann die radiale Erstreckung des Lenkwinkelsensors minimiert werden.

Weitere vorteilhafte Ausgestaltungen und Einzelheiten der Erfindung sind der folgenden Beschreibung zu entnehmen, in der die Erfindung anhand der in der Zeichnung dargestellten Ausführungsbeispiele näher beschrieben und erläutert ist.

Es zeigen:

Figur 1       eine Draufsicht auf eine erste Ausführungsform eines Lenkwinkelsensors;

Figur 2a       einen Schnitt durch den Lenkwinkelsensor gemäß II-II in Figur 1;

Figur 2b       ein der Figur 2a entsprechender Schnitt einer zweiten Ausführungsform eines Lenkwinkelsensors;

Figuren 3a - 3c       alternative Anordnungen von Magnetabschnitten und Magnetfeldsensoren;

Figur 4       von einem Magnetfeldsensor erzeugte Ausgangssignale; und

Figur 5       eine tabellarische Übersicht zur Analyse der asynchronen Signalperioden von Hauptrotor und Zusatzrotor des Lenkwinkelsensors.

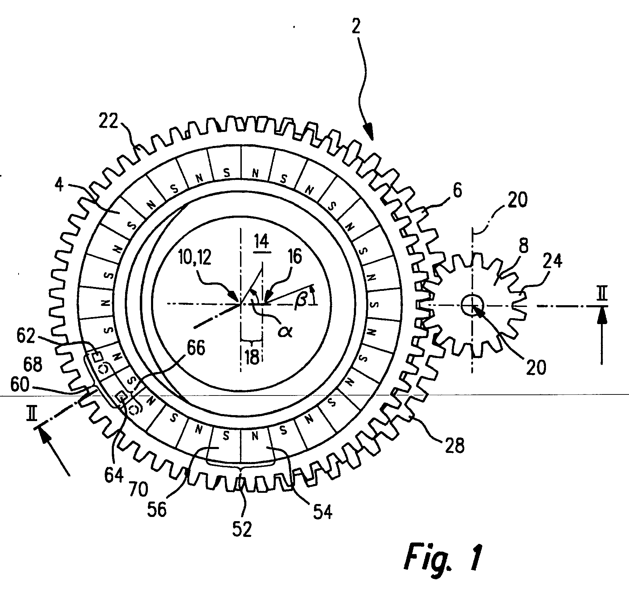

In Figur 1 ist ein Lenkwinkelsensor insgesamt mit dem Bezugszeichen 2 nachbezeichnet. Dieser weist einen im wesentlichen scheibenförmig ausgebildeten Hauptrotor 4 sowie einen im wesentlichen scheibenförmig ausgebildeten Zusatzrotor 6 auf. Ferner ist ein Getriebeglied 8 vorgesehen, das eine Getriebekette mit dem Hauptrotor 4 und dem Zusatzrotor 6 bildet.

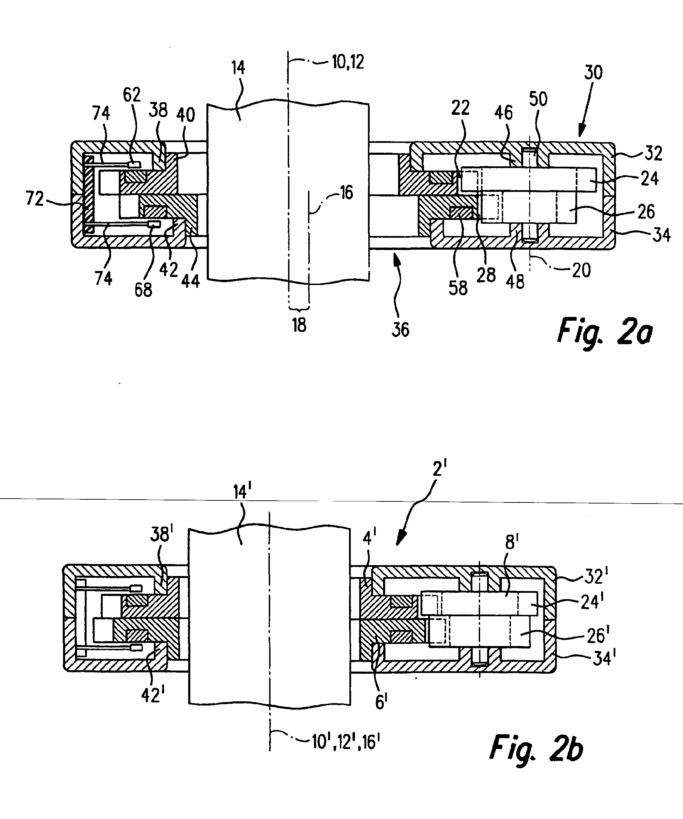

Der Hauptrotor 4 rotiert um eine Rotationsachse 10, die koaxial zur Drehachse 12 einer (auch in Figur 2a dargestellten) Lenksäule 14 angeordnet ist. Die Rotationsachse 16 des Zusatzrotors 6 ist zu der Drehachse 12 der Lenksäule 14 und zur Rotationsachse 10 des Hauptrotors 4 um das Maß 18 versetzt. Das Getriebeglied 8 rotiert um eine Rotationsachse 20.

Der Hauptrotor 4 weist eine Außenverzahnung 22 auf, die mit einem Antriebsabschnitt 24 des Getriebeglieds 8 kämmt. Der Antriebsabschnitt 24 ist durch ein (auch in Figur 2a dargestelltes) Zahnrad gebildet. Das Getriebeglied 8 weist ferner einen Abtriebsabschnitt 26 auf, der ebenfalls als Zahnrad ausgebildet ist und mit einer Verzahnung 28 des Zusatzrotors 6 kämmt.

Der Hauptrotor 4, der Zusatzrotor 6 sowie das Getriebeglied 8 sind in einem nur in Figur 2a dargestellten Gehäuse 30 gelagert. Dieses weist ein Gehäuseoberteil 32 sowie ein Gehäuseunterteil 34 auf. Beide Gehäuseteile 32 und 34 bilden eine Öffnung 36, durch die sich die Längssäule 14 hindurch erstreckt. Das obere Gehäuseteil 32 bildet im Bereich der Öffnung 36 einen Führungskragen 38 für einen Ringabsatz 40 des Hauptrotors 4, wodurch der Hauptrotor 4 am Gehäuse 30 geführt ist. Entsprechend weist das untere Gehäuseteil 34 einen Führungskragen 42 für einen Ringabsatz 44 des Zusatzrotors 6 auf, wodurch dieser am Gehäuse 30 gelagert ist. Das Gehäuse 30 weist ferner Lageraufnahmen 46 und 48 für einen Lagerbolzen 50 auf, der drehfest mit dem Antriebsabschnitt 24 und dem Abtriebsabschnitt 26 des Getriebeglieds 8 verbunden ist.

Der Hauptrotor 4 weist endlang eines Kreises verteilte Magnetabschnitte 52 auf, wobei Nordsektoren 54 und Südsektoren 56 alternierend angeordnet sind. Ein Magnetabschnitt 52 ist durch einen Nordsektor 54 und einen Südsektor 56 gebildet. Der Zusatzrotor 6 weist ebenfalls entlang eines Kreises angeordnete Magnetabschnitte 58 mit Nord- und Südsektoren auf.

Den Magnetabschnitten 52 des Hauptrotors 4 ist eine Magnetfeldsensoranordnung 60 zugeordnet, die einen ersten Magnetfeldsensor 62 und einen zweiten Magnetfeldsensor 64 umfasst. Weiterhin ist eine zweite Magnetfeldsensoranordnung 66 vorgesehen, die dem Zusatzrotor 6 zugeordnet ist. Diese weißt einen ersten Magnetfeldsensor 68 auf, der auch in Figur 2a dargestellt ist, sowie einen zweiten Magnetfeldsensor 70, der in der Figur 1 dargestellten Anordnung verdeckt ist und daher gestrichelt dargestellt ist.

Aus Figur 2a ist ersichtlich, dass die Magnetfeldsensoren (dargestellt 62 und 68) über Verbindungselemente 74 mit einer Leiterplatte 72 verbunden sind, wobei die Magnetfeldsensoren 62 und 68, die Verbindungselemente 64 sowie die Leiterplatte 72 innerhalb des Gehäuses 30 aufgenommen sind.

In Figur 2b ist eine zweite Ausführungsform eines Lenkwinkelsensor 2' dargestellt, der ebenfalls einen Hauptrotor 4', einen Zusatzrotor, 6' sowie ein Getriebeglied 8' umfasst. Im Unterschied zu dem in Figuren 1 und 2a dargestellten Lenkwinkelsensor 2 sind die Rotationsachse 10' des Hauptrotors 4', die Rotationsachse 16' des Zusatzrotors 6' sowie die Drehachse 12' der Lenksäule 14' koaxial zueinander angeordnet. Das Getriebeglied 8' ist mit seinem Antriebsabschnitt 24' sowie seinem Abtriebsabschnitt 26' an die Verzahnungsgeometrie des Hauptrotors 4' beziehungsweise des Zusatzrotors 6' angepasst. Die Führungskragen 38' und 42' der Gehäuseteile 32' und 34' sind zueinander fluchtend angeordnet.

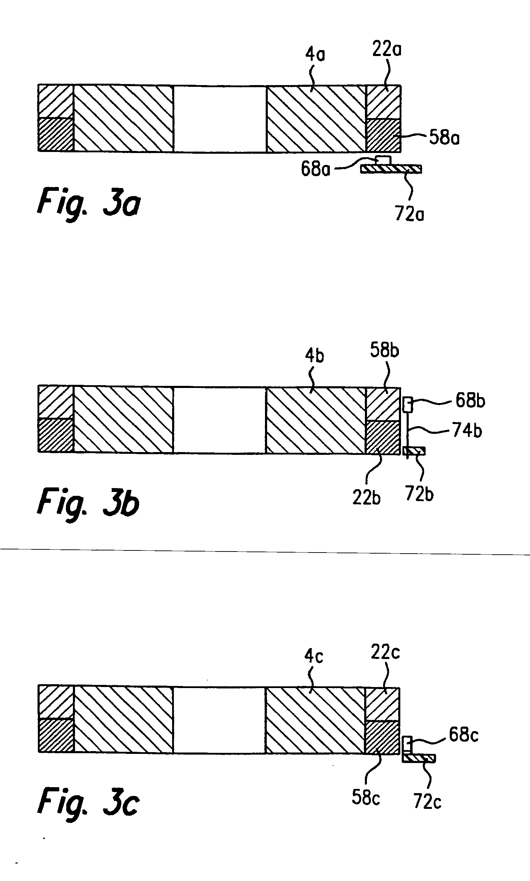

In den Figuren 3a - 3c sind alternative Ausführungsformen für mögliche Anordnungen von Magnetabschnitten und Magnetfeldsensoren anhand vereinfacht dargestellter Rotoren 4a bis 4c dargestellt, wobei die dargestellten Anordnungen beispielhaft für einen Zusatzrotor 4 gelten sollen. Für einen Hauptrotor 6 können die in den Figuren 3a - 3c dargestellten Anordnungen entsprechend spiegelsymmetrisch ausgebildet sein.

In der Figur 3a sind Magnetabschnitte 58a entlang eines äußeren Umfangs des Rotors 4a angeordnet. Entsprechende Magnetfeldsensoren (dargestellt der Magnetfeldsensor 68a) sind axial versetzt zu den Magnetabschnitten 58a vorgesehen.

Der Magnetfeldsensor 68a ist auf einer Leiterplatte 72a angeordnet.

Gemäß Figur 3b sind Magnetabschnitte 58b ebenfalls entlang eines äußeren Umfangs eines Rotors 4b vorgesehen. Entsprechende Magnetfeldsensoren (dargestellt Magnetfeldsensor 68b) sind radial außerhalb vom Rotor 4b angeordnet. Der Magnetfeldsensor 68b steht über ein Verbindungselement 74b in Verbindung mit einer Leiterplatte 72b.

Die in Figur 3c dargestellte Anordnung entspricht im Wesentlichen der in Figur 3b dargestellten Anordnung, wobei jedoch auf die Verwendung eines Verbindungselements zwischen Magnetfeldsensor 68c und Leiterplatte 72c verzichtet wird.

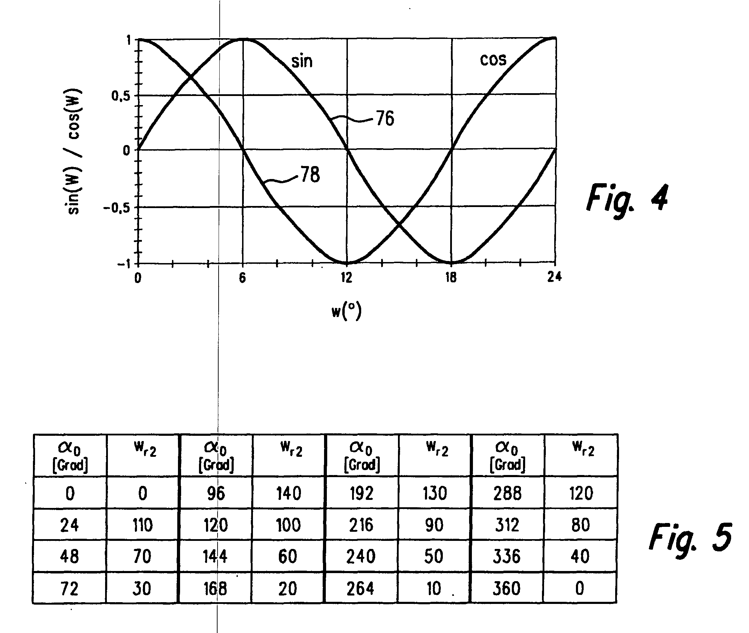

In Figur 4 sind die Ausgangssignale der Magnetfeldsensoranordnung 60 dargestellt. Das sinusförmige Signal 76 entspricht dem Ausgangssignal des Magnetfeldsensors 62. Das cosinusförmige Signal 78 entspricht dem Ausgangssignal des Magnetfeldsensors 64. Die Signale 76 und 78 sind um 6° zueinander versetzt. Entsprechende Signale können durch die Magnetfeldsensoren 68 und 70 der Magnetfeldsensoranordnung 66 erzeugt werden.

Im Folgenden soll das Ausführungsbeispiel anhand konkreter Zahlenbeispiele erläutert werden.

Die Zähnezahl des Hauptrotors 4 beträgt $z_{r1}$ = 60. Die Zähnezahl des Zusatzrotors 6 beträgt $z_{r2}$ = 48. Die Zähnezahl des Antriebsabschnitts 24 des Getriebeglieds 8 beträgt $z_{g1}$ = 15, die des Abtriebsabschnitts 26 $z_{g2}$ = 26. Das Übersetzungsverhältnis der aus Hauptrotor 4, Getriebeglied 8 und Zusatzrotor 6 gebildeten Getriebekette ergibt sich somit zu

$$\ddot{u} = \frac{z_{r1}}{z_{g1}} * \frac{z_{g2}}{z_{r2}} = \frac{60}{15} * \frac{26}{48} = 2,167$$

Der Hauptrotor 4 weist 15 Magnetabschnitte 52 auf, die einen Winkel $\alpha_{pr1}$ von jeweils 24° einnehmen. Jeder Sektor 54 und 56 eines Magnetabschnitts 52 nimmt einen Winkel von 12° ein. Somit wiederholt sich der in Figur 4 dargestellte Signalverlauf bei einer Umdrehung des Hauptrotors 4 insgesamt $p_{r1}$ = 15 mal.

Der Zusatzrotor weist 12 Magnetabschnitte 58 auf, die einen Winkel $\beta_{pr2}$ von jeweils 30° einnehmen. Jeder Sektor eines Magnetabschnitts 58 nimmt einen Winkel von 15° ein. Somit wiederholt sich der durch die Magnetfeldsensoranordnung 66 sensierte Signalverlauf bei einer Umdrehung des Zusatzrotors 6 insgesamt $p_{r2}$ = 12 mal.

Die Auflösung $\alpha_{ar1}$ der Magnetfeldsensoranordnung 60 beträgt 0,1°. Somit beträgt für den Hauptrotor 4 die Gesamtzahl der elektronischen Signalwerte pro Signaldurchgang

$$w_{r1(ges)} = \frac{\alpha_{pr1}}{\alpha_{ar1}} = \frac{24°}{0,1°} = 240$$

Die Auflösung $\beta_{ar2}$ der Magnetfeldsensoranordnung 66 beträgt 0,2°. Somit beträgt für den Zusatzrotor 6 die Gesamtzahl der elektronischen Signalwerte pro Signaldurchgang

$$w_{r2(ges)} = \frac{\beta_{pr2}}{\beta_{ar2}} = \frac{30°}{0,2°} = 150$$

Eine Anzahl von 240 oder 150 Signalwerten ist durch 8 Bit darstellbar ($2^8$ Signalwerte = 256 > 240 > 150).

Der Signalwinkel des periodischen Signals des Zusatzrotors 6, der aus dem Drehwinkel des Hauptrotors 4 ermittelt wird, beträgt

$$\varepsilon_{r2} = p_{r2} * \beta_{r2} = p_{r2} * \ddot{u} * \alpha_{r1}$$

Jedem Signalwinkel kann ein entsprechender elektronischer Signalwert zugeordnet werden:

$$w_{r2} = \frac{\varepsilon_{r2}}{360°} * w_{r2(ges)}$$

Gemäß der in Figur 5 dargestellten Tabelle sind verschiedenen Winkeln $\alpha_0$ (bei Nulldurchgang des periodischen Signalverlaufs des Hauptrotors 4) Signalwerte $w_{r2}$ zugeordnet, die den Signalwinkeln des Zusatzrotors 6 entsprechen. Ein Signalwert $w_{r2}$ liegt im Intervall von 0 bis 150 ($w_{r2(ges)}$). Aus der Tabelle ist ersichtlich, dass sich die Signalwerte $w_{r2}$ des Zusatzrotors 6 bei sich periodisch wiederholenden Signalwerten des Hauptrotors 4 um wenigstens 10 Signalwerte unterscheiden. Somit kann innerhalb eines Winkels von 360° jeder Winkel eindeutig detektiert werden.

**Patentansprüche**

1. Lenkwinkelsensor (2), mit einem drehsynchron mit einer Lenksäule (14) oder Lenkrad koppelbaren Hauptrotor (4), der um die Drehachse (12) der Lenksäule (14) herum drehbar ist, mit mindestens einem vom Hauptrotor (4) antreibbaren Zusatzrotor (6), mit einer ersten Abtasteinheit zur Abtastung der Drehwinkelstellung des Hauptrotors (4), mit einer zweiten Abtasteinheit zur Abtastung der Drehwinkelstellung des Zusatzrotors (6), wobei der Zusatzrotor (6) um die Drehachse (12) der Lenksäule (14) herum drehbar ist und zum Antrieb des Zusatzrotors (6) mindestens ein vom Hauptrotor (4) angetriebenes Getriebeglied (8) vorgesehen ist, **dadurch gekennzeichnet, dass** die Rotationsachse (10) des Hauptrotors (4) und die Rotationsachse (16) des Zusatzrotors (6) zueinander versetzt angeordnet sind.

**2.** Lenkwinkelsensor (2) nach Anspruch 1, **dadurch gekennzeichnet, dass** eine Auswerteeinheit zur Auswertung der Drehwinkelstellung des Hauptrotors (4) und der Drehwinkelstellung des Zusatzrotors (6) vorgesehen ist.

**3.** Lenkwinkelsensor (2) nach Anspruch 1 oder 2, **dadurch gekennzeichnet, dass** die Rotationsachse (10) des Hauptrotors (4) koaxial zur Drehachse (12) der Lenksäule (14) ist.

**4.** Lenkwinkelsensor (2) nach Anspruch 1 oder 2, **dadurch gekennzeichnet, dass** die Rotationsachse (16) des Zusatzrotors (6) koaxial zur Drehachse (12) der Lenksäule (14) ist.

**5.** Lenkwinkelsensor (2) nach mindestens einem der vorhergehenden Ansprüche, **dadurch gekennzeichnet, dass** der Hauptrotor (6) und der Zusatzrotor (4) im Wesentlichen parallel zueinander angeordnet sind.

**6.** Lenkwinkelsensor (2) nach mindestens einem der vorhergehenden Ansprüche, **dadurch gekennzeichnet, dass** das Getriebeglied (8) einen Antriebsabschnitt (24) zum Antrieb durch den Hauptrotor (4) und einen Abtriebsabschnitt (26) zum Antrieb des Zusatzrotors (6) aufweist.

**7.** Lenkwinkelsensor (2) nach mindestens einem der vorhergehenden Ansprüche, **dadurch gekennzeichnet, dass** die Übersetzung der Getriebekette aus Hauptrotor (4), Getriebeglied (8) und Zusatzrotor (6) ungleich (1) ist.

**8.** Lenkwinkelsensor (2) nach mindestens einem der vorhergehenden Ansprüche, **dadurch gekennzeichnet, dass** die Übersetzung der Getriebekette aus Hauptrotor (4), Getriebeglied (8) und Zusatzrotor (6) einem Zahlenwert aus der Menge der positiven reellen Zahlen, ausgenommen der Menge der positiven ganzen Zahlen, entspricht.

**9.** Lenkwinkelsensor nach mindestens einem der vorhergehenden Ansprüche, **dadurch gekennzeichnet, dass** Hauptrotor (4) und Zusatzrotor (6) jeweils sich über einen Winkelbereich erstreckende Magnetabschnitte (52, 58) mit Sektoren (54, 56) unterschiedlicher Polung aufweisen und dass beide Abtasteinheiten Magnetfeldsensoranordnungen (60, 66) aufweisen, deren Ausgangssignale der Auswerteinheit zur Bestimmung des absoluten Lenkradwinkels zuführbar sind.

**10.** Lenkwinkelsensor (2) nach Anspruch 9, **dadurch gekennzeichnet, dass** die Sektoren (54, 56) eines Magnetabschnitts (52, 58) einen gleichen Winkel einnehmen.

**11.** Lenkwinkelsensor (2) nach Anspruch 9 oder 10, **dadurch gekennzeichnet, dass** der Hauptrotor (4) und/oder der Zusatzrotor (6) mindestens zwei Magnetabschnitte (52, 58) aufweist beziehungsweise aufweisen.

**12.** Lenkwinkelsensor (2) nach mindestens einem der Ansprüche 9 bis 11, **dadurch gekennzeichnet, dass** der Hauptrotor (4) mindestens 5, insbesondere 15 Magnetabschnitte (52), und der Zusatzrotor mindestens 4, insbesondere 12 Magnetabschnitte (58) aufweist.

**13.** Lenkwinkelsensor (2) nach mindestens einem der Ansprüche 9 bis 12, **dadurch gekennzeichnet, dass** die Magnetabschnitte (52, 58) entlang eines Kreises gleichmäßig verteilt sind.

**14.** Lenkwinkelsensor nach mindestens einem der Ansprüche 9 bis 13, **dadurch gekennzeichnet, dass** eine Magnetfeldsensoranordnung (60), (66) mindestens einen analogen Magnetfeldsensor (62, 64, 68, 70) aufweist.

**15.** Lenkwinkelsensor (2) nach mindestens einem der Ansprüche 9 bis 14, **dadurch gekennzeichnet, dass** eine Magnetfeldsensoranordnung (60, 66) zwei zueinander versetzt angeordnete Magnetfeldsensoren (62, 64 bzw. 68, 70) aufweist.

**16.** Lenkwinkelsensor nach mindestens einem der Ansprüche 9 bis 15, **dadurch gekennzeichnet, dass** die Magnetfeldsensoren (62, 64 bzw. 68, 70) um die Hälfte des von einem Sektor (54, 56) eingenommenen Winkelbereich zueinander versetzt sind.

**17.** Lenkwinkelsensor (2) nach mindestens einem der Ansprüche 9 bis 16, **dadurch gekennzeichnet, dass** die Magnetabschnitte (52, 58) entlang des äußeren Umfangs des Hauptrotors (4) und/oder des Zusatzrotors (6) vorgesehen sind und die Magnetfeldsensoranordnungen (60,66) in radialer Richtung versetzt zu den Magnetabschnitten (52, 58) angeordnet sind.

**18.** Lenkwinkelsensor (2) nach mindestens einem der Ansprüche 9 bis 17, **dadurch gekennzeichnet, dass** die Magnetabschnitte (52, 58) entlang eines konzentrisch zur Rotationsachse (10) des Hauptrotors (4) und/oder zur Rotationsachse (16) des Zusatzrotors (6) angeordneten Kreises vorgesehen sind und die Magnetfeldsensoranordnungen (60,66) in axialer Richtung versetzt zu den Magnetabschnitten (52, 58) angeordnet b sind.

## Claims

1. Steering angle sensor (2) having a main rotor (4) which can be coupled in a rotationally synchronous fashion to a steering column (14) or steering wheel and which can be rotated about the rotational axis (12) of the steering column (14), having at least one additional rotor (6) which can be driven by the main rotor (4), having a first scanning unit for scanning the rotational angle position of the main rotor (4), having a second scanning unit for scanning the rotational angle position of the additional rotor (6), wherein the additional rotor (6) can be rotated about the rotational axis (12) of the steering column (14), and at least one transmission element (8) which is driven by the main rotor (4) is provided for driving the additional rotor (6), **characterized in that** the rotational axis (10) of the main rotor (4) and the rotational axis (16) of the additional rotor (6) are arranged offset with respect to one another.

2. Steering angle sensor (2) according to Claim 1, **characterized in that** an evaluation unit is provided for evaluating the rotational angle position of the main rotor (4) and the rotational angle position of the additional rotor (6).

3. Steering angle sensor (2) according to Claim 1 or 2, **characterized in that** the rotational axis (10) of the main rotor (4) is coaxial with respect to the rotational axis (12) of the steering column (14).

4. Steering angle sensor (2) according to Claim 1 or 2, **characterized in that** the rotational axis (16) of the additional rotor (6) is coaxial with respect to the rotational axis (12) of the steering column (14).

5. Steering angle sensor (2) according to at least one of the preceding claims, **characterized in that** the main rotor (6) and the additional rotor (4) are arranged substantially parallel to one another.

6. Steering angle sensor (2) according to at least one of the preceding claim, **characterized in that** the transmission element (8) has a drive section (24) for being driven by the main rotor (4) and an output section (26) for driving the additional rotor (6).

7. Steering angle sensor (2) according to at least one of the preceding claims, **characterized in that** the transmission ratio of the transmission chain composed of the main rotor (4), transmission element (8) and additional rotor (6) is unequal (1).

8. Steering angle sensor (2) according to at least one of the preceding claims, **characterized in that** the transmission ratio of the transmission chain composed of the main rotor (4), a transmission element (8) and additional rotor (6) corresponds to a numerical value composed of the set of positive real numbers excluding the set of positive integers,

9. Steering angle sensor according to at least one of the preceding claims, **characterized in that** the main rotor (4) and additional rotor (6) each has magnet sections (52, 58) which extend over an angular range and have sectors (54, 56) of different polarity, and **in that** the two scanning units have magnetic field sensor arrangements (60, 66), the output signal of which can be fed to the evaluation unit in order to determine the absolute steering wheel angle.

10. Steering angle sensor (2) according to Claim 9, **characterized in that** the sectors (54, 56) of a magnet section (52, 58) assume the same angle.

11. Steering angle sensor (2) according to Claim 9 or 10, **characterized in that** the main rotor (4) and/or the additional rotor (6) have/has at least two magnet sections (52, 58).

12. Steering angle sensor (2) according to at least one of Claim 9 to 11, **characterized in that** the main rotor (4) has at least 5, in particular 15 magnet sections (52), and the additional rotor has at least 4, in particular 12 magnet sections (58).

13. Steering angle sensor (2) according to at least one of Claims 9 to 12, **characterized in that** the magnet sections (52, 58) are distributed uniformly along a circle.

14. Steering angle sensor according to at least one of Claims 9 to 13, **characterized in that** a magnetic field sensor arrangement (60), (66) has at least one analogue magnetic field sensor (62, 64, 68, 70).

15. Steering angle sensor (2) according to at least one of Claims 9 to 14, **characterized in that** a magnetic field sensor arrangement (60, 66) has two magnetic field sensors (62, 64 and 68, 70) which are arranged offset with respect to one another.

16. Steering angle sensor according to at least one of Claims 9 to 15, **characterized in that** the magnetic field sensors (62, 64 and 68, 70) are offset with respect to one another by half the angular range taken up by a sector (54, 56).

17. Steering angle sensor (2) according to at least one of Claims 9 to 16, **characterized in that** the magnetic sections (52, 58) are provided along the outer circumference of the main rotor (4) and/or of the additional rotor (6), and the magnetic field sensor arrangements (60, 66) are arranged in the radial direction, offset with respect to the magnet sections (52, 58).

18. Steering angle sensor (2) according to at least one of Claims 9 to 17, **characterized in that** the magnet sections (52, 58) are provided along a circle which is arranged concentrically with respect to the rotational axis (10) of the main rotor (4) and/or with respect to the rotational axis (16) of the additional rotor (6), and the magnetic field sensor arrangements (60, 66) are arranged in the axial direction, offset with respect to the magnet sections (52, 58).


**Revendications**

1. Capteur d'angle de craquage (2), avec un rotor principal (4) pouvant être couplé de façon synchrone en rotation avec une colonne de direction (14) ou un volant de direction, ledit rotor pouvant tourner autour de l'axe de rotation (12) de la colonne de direction (14), avec au moins un rotor supplémentaire (6) pouvant être entraîné en entrée par le rotor principal (4), avec une première unité de détection servant à détecter la position d'angle de rotation du rotor principal (4), avec une deuxième unité de détection servant à détecter la position d'angle de rotation du rotor supplémentaire (6), le rotor supplémentaire (6) pouvant tourner autour de l'axe de rotation (12) de la colonne de direction (14) et au moins un élément de transmission (8) entraîné en entrée par le rotor principal (4) étant prévu pour entraîner en entrée le rotor supplémentaire (6), **caractérisé en ce que** l'axe de rotation (10) du rotor principal (4) et l'axe de rotation (16) du rotor supplémentaire (6) sont disposés de façon décalée l'un par rapport à l'autre.

2. Capteur d'angle de braquage (2) selon la revendication 1, **caractérisé en ce qu'**une unité d'analyse servant à analyser la position d'angle de rotation du rotor principal (4) et la position d'angle de rotation du rotor supplémentaire (6) est prévue.

3. Capteur d'angle de braquage (2) selon la revendication 1 ou 2, **caractérisé en ce que** l'axe de rotation (10) du rotor principal (4) se situe dans le plan coaxial par rapport à l'axe de rotation (12) de la colonne de direction (14).

4. Capteur d'angle de braquage (2) selon la revendication 1 ou 2, **caractérisé en ce que** l'axe de rotation (16) du rotor supplémentaire (6) se situe dans le plan coaxial par rapport à l'axe de rotation (12) de la colonne de direction (14).

5. Capteur d'angle de braquage (2) selon au moins l'une quelconque des revendications précédentes, **caractérisé en ce que** le rotor principal (6) et le rotor supplémentaire (4) sont disposés pour l'essentiel parallèlement l'un par rapport à l'autre.

6. Capteur d'angle de braquage (2) selon au moins l'une quelconque des revendications précédentes, **caractérisé en ce que** l'élément de transmission (8) comporte une section d'entraînement en entrée (24) pour l'entraînement en entrée par le rotor principal (4) et une section d'entraînement en sortie (26) pour l'entraînement en entrée du rotor supplémentaire (6).

7. Capteur d'angle de braquage (2) selon au moins l'une quelconque des revendications précédentes, **caractérisé en ce que** la démultiplication de la chaîne de transmission composée du rotor principal (4), de l'élément de transmission (8) et du rotor supplémentaire (6) est inégale (1).

8. Capteur d'angle de braquage (2) selon au moins l'une quelconque des revendications précédentes, **caractérisé en ce que** la démultiplication de la chaîne de transmission composée du rotor principal (4), de l'élément de transmission (8) et du rotor supplémentaire (6) correspond à une valeur numérique composée de la quantité de nombres réels positifs, à laquelle on soustrait la quantité de nombres entiers positifs.

9. Capteur d'angle de braquage selon au moins l'une quelconque des revendications précédentes, **caractérisé en ce que** le rotor principal (4) et le rotor supplémentaire (6) comportent des sections d'aimant (52, 58) s'étendant respectivement sur une plage angulaire et dotées de secteurs (54, 56) de polarisation différente et que les deux unités de détection comportent des agencements de détection de champ magnétique (60, 66) dont les signaux de sortie peuvent être amenés à l'unité d'analyse en vue de déterminer l'angle de volant de direction absolu.

10. Capteur d'angle de braquage (2) selon la revendication 9, **caractérisé en ce que** les secteurs (54, 56) d'une section d'aimant (52, 58) présentent un angle identique.

11. Capteur d'angle de braquage (2) selon la revendication 9 ou 10, **caractérisé en ce que** le rotor principal (4) et/ou le rotor supplémentaire (6) comporte et/ou comportent au moins deux sections d'aimant (52, 58).

12. Capteur d'angle de braquage (2) selon au moins l'une quelconque des revendications 9 à 11, **caractérisé en ce que** le rotor principal (4) comporte au moins 5, notamment 15, sections d'aimant (52) et que le rotor supplémentaire comporte au moins 4, notamment 12, sections d'aimant (58).

**13.** Capteur d'angle de braquage (2) selon au moins l'une quelconque des revendications 9 à 12, **caractérisé en ce que** les sections d'aimant (52, 58) sont réparties de façon régulière le long d'un cercle.

**14.** Capteur d'angle de braquage selon au moins l'une quelconque des revendications 9 à 13, **caractérisé en ce qu'**un agencement de détection de champ magnétique (60), (66) comporte au moins un capteur de champ magnétique (62, 64, 68, 70) analogique.

**15.** Capteur d'angle de braquage (2) selon au moins l'une quelconque des revendications 9 à 14, **caractérisé en ce qu'**un agencement de détection de champ magnétique (60, 66) comporte deux capteurs de champ magnétique (62, 64 et/ou 68, 70) disposés de façon décalée l'un par rapport à l'autre.

**16.** Capteur d'angle de braquage selon au moins l'une quelconque des revendications 9 à 15, **caractérisé en ce que** les capteurs de champ magnétique (62, 64 et/ou 68, 70) sont décalés les uns par rapport aux autres de la moitié de la plage angulaire occupée par un secteur (54, 56).

**17.** Capteur d'angle de braquage (2) selon au moins l'une quelconque des revendications 9 à 16, **caractérisé en ce que** les sections d'aimant (52, 58) sont prévues le long du périmètre extérieur du rotor principal (4) et/ou du rotor supplémentaire (6) et que les agencements de détection de champ magnétique (60, 66) sont disposés de façon décalée dans la direction radiale par rapport aux sections d'aimant (52, 58).

**18.** Capteur d'angle de braquage (2) selon au moins l'une quelconque des revendications 9 à 17, **caractérisé en ce que** les sections d'aimant (52, 58) sont prévues le long d'un cercle disposé concentriquement par rapport à l'axe de rotation (10) du rotor principal (4) et/ou à l'axe de rotation (16) du rotor supplémentaire (6) et que les agencements de détection de champ magnétique (60, 66) sont disposés dans la direction axiale de façon décalée par rapport aux sections d'aimant (52, 58).

*Fig. 1*

Fig. 2a

Fig. 2b

Fig. 3a

Fig. 3b

Fig. 3c

*Fig. 4*

*Fig. 5*

| $\alpha_0$ [Grad] | $w_{r,2}$ | $\alpha_0$ [Grad] | $w_{r,2}$ | $\alpha_0$ [Grad] | $w_{r,2}$ | $\alpha_0$ [Grad] | $w_{r,2}$ |
|---|---|---|---|---|---|---|---|
| 0 | 0 | 96 | 140 | 192 | 130 | 288 | 120 |
| 24 | 110 | 120 | 100 | 216 | 90 | 312 | 80 |
| 48 | 70 | 144 | 60 | 240 | 50 | 336 | 40 |
| 72 | 30 | 168 | 20 | 264 | 10 | 360 | 0 |

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10110785 A1
- DE 19506938 A1
- DE 4409892 A1
- EP 0477653 A
- DE 19936211 A1